# EUROPÄISCHE PATENTSCHRIFT

(11) **EP 1 675 677 B1**
(45) Veröffentlichungstag und Bekanntmachung des Hinweises auf die Patenterteilung: **22.07.2009**
(21) Anmeldenummer: 04765890.1
(22) Anmeldetag: 08.10.2004
(51) Int. Cl.: B01J 19/30

(54) **KATALYSATORSCHÜTTUNGEN MIT AN DEN ÄUSSEREN REIBUNGSFLÄCHEN ABGERUNDETEN KATALYTISCH INAKTIVEN FORMKÖRPERN**
CATALYTIC BULK MATERIAL HAVING CATALYTICALLY INACTIVE SHAPED BODIES THAT ARE ROUNDED OFF ON THE EXTERNAL FRICTION SURFACES
ECOULEMENTS DE CATALYSEUR COMPORTANT DES ELEMENTS MOULES CATALYTIQUEMENT INACTIFS ARRONDIS SUR LEURS FACES EXTERIEURES DE FROTTEMENT

(30) Priorität: 15.10.2003 DE 10348625
(43) Veröffentlichungstag der Anmeldung: 05.07.2006
(73) Patentinhaber: BASF SE, 67056 Ludwigshafen (DE)
(72) Erfinder: HARTH, Klaus, Tai Tam Road 38 Tai Tam (HK); JOHANN, Thorsten, 67063 Ludwigshafen (DE); WALSDORFF, Christian, 67061 Ludwigshafen (DE); HOFSTADT, Otto, 67346 Speyer (DE); BAIER, Michael, 68161 Mannheim (DE); PÖPEL, Karin, 64297 Darmstadt (DE)
(86) Internationale Anmeldenummer: PCT/EP2004/011258
(87) Internationale Veröffentlichungsnummer: WO 2005/037427

(56) Entgegenhaltungen:
- EP-A- 0 095 851
- EP-A- 1 127 618
- WO-A-99/40236
- WO-A-03/074457
- US-A- 3 151 187

## Beschreibung

Die vorliegende Erfindung betrifft neue Katalysatorschüttungen, enthaltend eine physikalische Mischung von katalytisch aktiven und katalytisch inaktiven Formkörpern, wobei die katalytisch inaktiven Formkörper an den äußeren Reibungsflächen abgerundete Kanten aufweisen.

Aus der EP-A-60 317 sind zylinderförmige Formkörper aus Graphit zur Verdünnung von Katalysatorbetten in Verfahren zur Oxichlorierung von Ethylen zu Ethylendichlorid bekannt.

Aus der US-A-5,202,511 sind Formkörper aus Aluminiumoxid, die ggf. mit einer Alkalikomponente getränkt sind, zur Verdünnung von Katalysatorbetten in Verfahren zur Oxichlorierung von Ethylen zu Ethylendichlorid bekannt.

Aus der EP-A-1 020 222 ist Kupfer in Form scharfkantiger Formkörper, wie einfacher Hohlzylinder oder Triloben, als Inertmaterial zur Verdünnung von Katalysatorbetten in exothermen Festbettverfahren bekannt.

Die hierbei eingesetzten Formkörper aus Graphit bzw. Aluminiumoxid haben den Nachteil, dass im Laufe der Synthese mechanischer Abrieb entsteht, der zu Druckverlusten führt.

Bei Katalysatorformkörpern, die deutlich geringere mechanische Stabilität als die Formkörper des Verdünnungsmaterials aufweisen, besteht insbesondere die Gefahr, dass die Katalysatorformkörper durch die katalytisch inerten Formkörper beschädigt werden, so dass es zu einem erhöhten Druckverlust entlang der Katalysatorschüttung und einem Verlust an katalytischer Aktivität kommt.

Der vorliegenden Erfindung lag daher die Aufgabe zugrunde, den zuvor genannten Nachteilen abzuhelfen.

Demgemäß wurden neue Katalysatorschüttungen, enthaltend eine physikalische Mischung von katalytisch aktiven und katalytisch inaktiven Formkörpern, gefunden, welche dadurch gekennzeichnet sind, dass die katalytisch inaktiven Formkörper Hohlzylinder oder Ringtabletten sind, die an den äußeren Reibungsflächen abgerundete Kanten aufweisen, wobei der Radius der Krümmung der Stirnflächen das 0,01- bis 0,5- fache des Außendurchmessers ist, und die katalytisch aktiven Formkörper keine Kugeln sind.

Die erfindungsgemäßen Katalysatorschüttungen können wie folgt hergestellt werden:

An den Reibungsflächen abgerundete katalytisch inaktive Formkörper in Form von Hohlzylindern oder Ringtabletten, die einen Radius der Krümmung der Stirnflächen vom 0,01- bis 0,5-fachen des Außendurchmessers aufweisen, können mit katalytisch aktiven Formkörpern, die bevorzugt an den Reibungsflächen abgerundet sind, ausgenommen Kugeln, als physikalische Mischungen in Katalysatorschüttungen eingesetzt werden.

Physikalische Mischungen sind mechanisch innig vermischte katalytisch aktive und katalytisch inaktive Formkörper.

Die erfindungsgemäß an den Reibungsflächen abgerundeten katalytisch aktiven Formkörper sowie die inaktiven Formkörper können in geeigneten Verformungs- oder Presswerkzeugen, bevorzugt Tablettenpressen, hergestellt werden.

Das Mischungsverhältnis von katalytisch aktiven Formkörpern zu katalytisch inaktiven Formkörpern kann in weiten Grenzen variiert werden und liegt in der Regel im Gewichtsverhältnis von 0,001:1 1 bis 10000:1, bevorzugt 0,1:1 1 bis 100:1, besonders bevorzugt 0,5:1 bis 10:1, insbesondere 0,8:1 bis 3:1.

Als katalytisch aktive Formkörper im Sinne der Erfindung sind alle bekannten Formkörper mit Ausnahme von Kugeln einsetzbar. Zwar besitzen Kugeln ebenfalls keine scharfen Kanten, zeigen dafür jedoch in der Regel einen zu hohen Druckverlust. Als katalytisch aktive Formkörper eignen sich beispielsweise Vollzylinder, Doughnuts, Sättel, Triloben oder Ringtabletten, bevorzugt Vollzylinder oder Ringtabletten, besonders bevorzugt Ringtabletten.

Die katalytisch aktiven bzw. inaktiven Formkörper können Kanten, auch scharfe Kanten, aufweisen, die sich nicht auf den Reibungsflächen befinden, also in das Innere des jeweiligen Formkörpers gerichtet sind. Beispielsweise können erfindungsgemäß geformte Ringtabletten zum äußeren Rand hin abgerundete Flächen, z.B. Stirnflächen, zum Rand der Innenbohrung hin jedoch scharfe Kanten aufweisen. Bevorzugt werden jedoch Formkörper, die nur abgerundete Kanten (also keinerlei scharfe Kanten) aufweisen.

Die katalytisch aktiven bzw. inaktiven Formkörper können gleiche, ähnliche oder verschiedene Geometrien haben. Auch Mischungen von verschiedenen Geometrien sowohl bei den katalytisch aktiven als auch bei den katalytisch inaktiven Formkörpern ist möglich, bevorzugt haben die katalytisch inaktiven Formkörper die gleiche oder eine ähnliche Geometrie wie die katalytisch aktiven Formkörper, besonders bevorzugt sind Ringtabletten mit abgerundeten Stirnflächen. Ganz besonders bevorzugt werden Ringtabletten, bei denen die Stirnflächen sowohl zum äußeren Rand als auch zum Rand der Innenbohrung hin abgerundet sind. Auch Ringtabletten mit einer sogenannten doughnut-artigen.Form sind geeignet.

Solche Ringtabletten mit abgerundeten Stirnflächen oder in "doughnut"-Form sind als Katalysatoren oder Katalysatorträger bekannt (EP-A-184 790, EP-A-1 052 018, US-B-6,518,220).

Die erfindungsgemäß eingesetzten katalytisch inaktiven Formkörper und katalytisch aktiven Formkörper weisen vorteilhafterweise Geometrien, wie sie in US-B-6,518,220 (DE-A-100 09 017) beschrieben sind, auf. Solche Formkörper, vorzugsweise Hohlzylinder oder Ringtabletten, besitzen beispielsweise einen Radius der Krümmung der Stirnflächen, der das 0,01 bis 0,5fache, bevorzugt das 0,05 bis 0,4fache, besonders bevorzugt das 0,1 bis 0,2fache des Außendurchmessers ist. Die Hohlzylinder oder Ringtabletten weisen dabei üblicherweise Außendurchmesser von 3 bis 20 mm, bevorzugt 3 bis 10 mm, besonders bevorzugt 3 bis 7 mm, insbesondere 3,5 bis 6,5 mm, und einen Innendurchmesser, der das 0,1 bis 0,7fache des Außendurchmessers beträgt, und eine Länge, die das 0,2 bis 2fache, bevorzugt das 0,3 bis 1,8flache, besonders bevorzugt das 0,4 bis 1,6fache des Außendurchmessers beträgt, auf.

Eine Kante beginnt im Sinne unserer Erfindung bei einem innenliegenden Winkel von kleiner oder gleich 90 Grad. Die erfindungsgemäßen Formkörper weisen vorzugsweise einen innenliegenden Winkel von größer als 90 Grad, insbesondere von größer als 100 Grad auf.

Katalytisch inaktive Formkörper sind solche Formkörper, deren katalytisch Aktivität 0 bis 15 % , bevorzugt 0 bis 10 %, besonders bevorzugt 0 bis 5 %, insbesondere 0 bis 2 %, der katalytischen Aktivität der katalytisch aktiven Formkörper beträgt.

Insbesondere sollten die katalytisch inaktiven auch möglichst inaktiv hinsichtlich der Katalyse etwaiger Nebenreaktionen sein, so dass die Gesamtselektivität des Verfahrens optimiert ist.

Als Materialien für katalytisch inaktive Formkörper eignen sich (je nach den Rahmenbedingungen des Verfahrens) beispielsweise Graphit, Aluminiumoxid, Steatit, Siliciumoxid oder Glas, bevorzugt Aluminiumoxid oder Steatit. Als Aluminiumoxide werden insbesondere γ-, δ-, θ oder α-Aluminiumoxid oder Mischungen dieser Aluminiumoxide verwendet. Bevorzugt werden Materialien mit geringer BET-Oberfläche von 0,01 bis 200 m²/g, bevorzugt 0,1 bis 150 m²/g, besonders bevorzugt 0,2 bis 120 m²/g. Solche Materialien können beispielsweise durch eine Calcinierung erhalten werden. Dem Material können auch Zusätze zur weiteren Inertisierung zugesetzt werden. Beispielsweise können die Formkörper mit wässrigen Alkaliverbindungen, wie NaCl, KCl, bevorzugt wässrigen Alkaliverbindungen mit flüchtigem Anion, wie Lithiumcarbonat, Lithiumhydrogencarbonat, Natriumcarbonat, Natriumhydrogencarbonat, Kaliumcarbonat, Kaliumhydrogencarbonat, getränkt und anschließend bei Temperaturen von 100 bis 1200°C, bevorzugt 120 bis 1000°C, besonders bevorzugt 150 bis 700°C, getrocknet werden.

Die katalytisch inaktiven Formkörper können in beliebigen heterogen-katalysierten Festbettverfahren eingesetzt werden, bevorzugt in exothermen Gasphasenverfahren, insbesondere bei Verfahren zur Oxichlorierung von Ethylen zu Ethylendichlorid, bei der Oxidation von Chlorwasserstoff zu Chlor (Deacon-Prozess), bei der Oxidation von Methanol zu Formaldehyd (Formox®-Prozess), bei der Oxidation von o-Xylol oder Naphthlin zu Phthlsäureanhydrid, bei der Oxidation von Ethen zu Ethylenoxid, bei der Oxidation von Butan, Butenen, Butadien oder Benzol zu Maleinsäureanhydrid oder bei der Oxidation von Propan oder Propen zu Acrolein oder Acrylsäure.

Als katalytisch aktive Massen zur Oxichlorierung von Ethylen zu Ethylendichlorid eignen sich alle hierfür bekannten katalytisch aktiven Massen, beispielsweise Kupferchlorid auf AL₂O₃-Trägem, sowie solche, die aus WO-A-99/48606 bekannt sind.

Als katalytisch aktive Massen zur Oxidation von Chlorwasserstoff zu Chlor (Deacon-Prozess) eignen sich alle hierfür bekannten katalytisch aktiven Massen, beispielsweise Kupferchlorid, Chromoxid, Rutheniumverbindungen, sowie solche, die aus EP-A-743 277 bekannt sind.

Als katalytisch aktive Massen zur Oxidation von Methanol zu Formaldehyd (Formox®-Prozess) eignen sich alle hierfür bekannten katalytisch aktiven Massen, beispielsweise Eisenmolybdate, sowie solche, die aus US 3,716,495 bekannt sind.

Als katalytisch aktive Massen zur Oxidation von o-Xylol oder Naphthalin zu Phthalsäureanhydrid eignen sich alle hierfür bekannten katalytisch aktiven Massen, beispielsweise Vanadiumpentoxid oder Vanadium/Titan-Oxide, z.B solche, die aus DE-A-2 510 994 oder WO-A-00/12214 bekannt sind.

Als katalytisch aktive Massen zur Oxidation von Ethen zu Ethylenoxid eignen sich hierfür bekannte katalytisch aktive Massen, beispielsweise bekannte Edelmetallkatalysatoren, z.B. solche, die aus DE 4 314 304, EP 0 557 833, EP 0 266 015 bekannt sind.

Als katalytisch aktive Massen zur Oxidation von Butan, Butenen, Butadien oder Benzol zu Maleinsäureanhydrid eignen sich alle hierfür bekannten katalytisch aktiven Massen, beispielsweise Phosphor/Vanadium-Mischoxide, z.B. solche, die aus US 3,293,268 bekannt sind.

Als katalytisch aktive Massen zur Oxidation von Propan oder Propen zu Acrolein oder Acrylsäure eignen sich alle hierfür bekannten katalytisch aktiven Massen, beispielsweise Multimetalloxidmassen, z.B. solche, die aus EP-A-608 838, US 3,475,488 oder EP-A-575 897 bekannt sind.

## Patentansprüche

1. Katalysatorschüttung enthaltend eine physikalische Mischung von katalytisch aktiven und katalytisch inaktiven Formkörpern, **dadurch gekennzeichnet, dass** die katalytisch inaktiven Formkörper Hohlzylinder oder Ringtabletten sind, die an den äußeren Reibungsflächen abgerundete Kanten aufweisen, wobei der Radius der Krümmung der Stirnflächen das 0,01 bis 0,5fache des Außendurchmessers ist, und die katalytisch aktiven Formkörper keine Kugeln sind.

2. Katalysatorschüttung enthaltend eine physikalische Mischung von katalytisch aktiven und katalytisch inaktiven Formkörpern nach Anspruch 1, **dadurch gekennzeichnet, dass** die katalytisch aktiven Formkörper an den äußeren Reibungsflächen abgerundete Kanten aufweisen.

3. Verfahren zur Herstellung von Katalysatorschüttungen aus katalytisch aktiven und katalytisch inaktiven Formkörpern, **dadurch gekennzeichnet, dass** als katalytisch inaktive Formkörper Hohlzylinder oder Ringtabletten eingesetzt werden, die an den äußeren Reibungsflächen abgerundete Kanten aufweisen, wobei der Radius der Krümmung der Stirnflächen das 0,01 bis 0,5fache des Außendurchmessers ist, und die katalytisch aktiven Formkörper keine Kugeln sind.

4. Verwendung der Katalysatorschüttungen nach Anspruch 1 in heterogenkatalysierten Festbettverfahren.

5. Verwendung der Katalysatorschüttungen nach Anspruch 1 in exothermen Gasphasenverfahren.

6. Verwendung der Katalysatorschüttungen nach Anspruch 1 bei Verfahren zur Oxichlorierung von Ethylen zu Ethylendichlorid, bei der Oxidation von Chlorwasserstoff zu Chlor (Deacon-Prozess), bei der Oxidation von Methanol zu Formaldehyd (Formox®-Prozess), bei der Oxidation von o-Xylol oder Naphthalin zu Phthalsäureanhydrid, der Oxidation von Ethen zu Ethylenoxid, der Oxidation von Butan, Butenen, Butadien oder Benzol zu Maleinsäureanhydrid oder der Oxidation von Propan oder Propen zu Acrolein oder Acrylsäure.

## Claims

1. A catalyst bed comprising a physical mixture of catalytically active and catalytically inactive shaped bodies, wherein the catalytically inactive shaped bodies are hollow cylinders or annular pellets having rounded edges on the external rubbing surfaces, with the radius of curvature of the end faces being from 0.01 to 0.5 times the external diameter, and the catalytically active shaped bodies are not spheres.

2. The catalyst bed comprising a physical mixture of catalytically active and catalytically inactive shaped bodies according to claim 1, wherein the catalytically active shaped bodies have rounded edges on the external rubbing surfaces.

3. A method of producing catalyst beds from catalytically active and catalytically inactive shaped bodies, wherein hollow cylinders or annular pellets having rounded edges on the external rubbing surfaces, with the radius of curvature of the end faces being from 0.01 to 0.5 times the external diameter, are used as catalytically inactive shaped bodies, and the catalytically active shaped bodies are not spheres.

4. The use of the catalyst beds according to claim 1 in heterogeneously catalyzed fixed-bed processes.

5. The use of the catalyst beds according to claim 1 in exothermic gas-phase processes.

6. The use of the catalyst beds according to claim 1 in processes for the oxychlorination of ethylene to ethylene dichloride, in the oxidation of hydrogen chloride to chlorine (Deacon process), in the oxidation of methanol to formaldehyde (Formox® process), in the oxidation of o-xylene or naphthalene to phthalic anhydride, the oxidation of ethene to ethylene oxide, the oxidation of butane, butenes, butadiene or benzene to maleic anhydride or the oxidation of propane or propene to acrolein or acrylic acid.

## Revendications

1. Garnissage catalytique contenant un mélange physique de corps moulés catalytiquement actifs et catalytiquement inactifs, **caractérisé en ce que** les corps moulés catalytiquement inactifs sont des cylindres creux ou des tablettes circulaires qui présentent des bords arrondis sur les surfaces de contact externes, le rayon de courbure des surfaces frontales représentant 0,01 à 0,5 fois le diamètre externe, et les corps moulés catalytiquement actifs ne sont pas des billes.

2. Garnissage catalytique contenant un mélange physique de corps moulés catalytiquement actifs et catalytiquement inactifs selon la revendication 1, **caractérisé en ce que** les corps moulés catalytiquement actifs présentent des bords arrondis sur les surfaces de contact externes.

3. Procédé de fabrication de garnissages catalytiques à base de corps moulés catalytiquement actifs et catalytiquement inactifs, **caractérisé en ce que** des cylindres creux ou des tablettes circulaires qui présentent des bords arrondis sur les surfaces de contact externes sont utilisés en tant que corps moulés catalytiquement inactifs, le rayon de courbure des surfaces frontales représentant 0,01 à 0,5 fois le diamètre externe, et les corps moulés catalytiquement actifs ne sont pas des billes.

4. Utilisation des garnissages catalytiques selon la revendication 1 dans des procédés à lit solide sous catalyse hétérogène.

5. Utilisation des garnissages catalytiques selon la revendication 1 dans des procédés exothermiques en phase gazeuse.

6. Utilisation des garnissages catalytiques selon la revendication 1 lors de procédés d'oxychloration d'éthylène en dichlorure d'éthylène, lors de l'oxydation de chlorure d'hydrogène en chlore (procédé de Deacon), lors de l'oxydation de méthanol en formaldéhyde (procédé Formox^{®}), lors de l'oxydation d'o-xylène ou de naphtaline en anhydride de l'acide phtalique, de l'oxydation d'éthène en oxyde d'éthylène, de l'oxydation de butane, de butènes, de butadiène ou de benzène en anhydride de l'acide maléique ou de l'oxydation de propane ou de propène en acroléine ou en acide acrylique.
